(19) **Europäisches Patentamt European Patent Office Office européen des brevets**

(11) **EP 3 754 507 B1**

(12) **EUROPEAN PATENT SPECIFICATION**

(45) Date of publication and mention
of the grant of the patent:
**12.11.2025 Bulletin 2025/46**

(21) Application number: **19181481.3**

(22) Date of filing: **20.06.2019**

(51) International Patent Classification (IPC):
*G06F 12/02* (2006.01)     *G06N 3/048* (2023.01)
*G06N 3/063* (2023.01)

(52) Cooperative Patent Classification (CPC):
**G06N 3/063; G06F 12/0207; G06F 12/0223;
G06F 12/0284; G06N 3/048;** G06F 12/023;
G06F 2212/1044

(54) **NEURAL NETWORK CIRCUIT AND A SYSTEM COMPRISING ONE OR A PLURALITY OF NEURAL NETWORK CIRCUITS**

NEURONALE NETZWERKSCHALTUNG UND SYSTEM MIT EINER ODER MEHREREN NEURONALEN NETZWERKSCHALTUNGEN

CIRCUIT DE RÉSEAU NEURONAL ET SYSTÈME COMPRENANT UN OU PLUSIEURS CIRCUITS DE RÉSEAU NEURONAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.12.2020 Bulletin 2020/52**

(73) Proprietor: **Cogito Instruments SA
1204 Genève (CH)**

(72) Inventors:
• **Bailly, Bruno
38000 Grenoble (FR)**

• **Chavade, Jacques
73230 St Jean d'Arvey (FR)**
• **Málnási-Csizmadia, Örs
1201 Genève (CH)**
• **Petrova, Boriana
74130 Contamine sur Arve (FR)**

(74) Representative: **P&TS SA (AG, Ltd.)
Avenue J.-J. Rousseau 4
P.O. Box 2848
2001 Neuchâtel (CH)**

(56) References cited:
EP-A1- 1 073 013     WO-A1-2014/080300
US-B1- 6 523 018     US-B2- 9 269 041

EP 3 754 507 B1

**Description**

<u>Field of the invention</u>

The present invention concerns a neural network circuit that comprises an input layer, an hidden layer and an output layer, the hidden layer having a plurality of neurons for processing an input vector with a variable number of components and variable component depth that is input into the input layer for comparison against reference vectors stored in said neurons. The present invention further relates to a system comprising one or a plurality of such neural network circuits..

<u>Description of related art</u>

Different kind of bio-inspired physical (hardware) or virtual (software) neural network circuit are known in the prior art, and aimed at different purposes such as:

- Functions approximation (which can be viewed as the key for all other applications)

- Classification

- Tracking

- Pattern/object recognition

- Signal processing

- Sorting/searching

- Decoding/translation

- Etc

In particular, two main types of so called "artificial intelligence" systems using neural networks are widely used: virtual, centralized, high performances systems (cloud-supercomputer-based architectures) and local, usually hardware-based systems ("at the edge" systems). The present invention is in particular related to the second type of system.

As opposed to typical computers based on the Von Neuman architecture (on ore more processing unit, one centralized memory unit, one sequential state machine with limited parallelism), neural networks use simple, dense interconnected, decision units called neurons working in parallel.

Conversely to Von Neuman machines which need precompiled instructions files from a higher-level description (aka application programs), neurons and their interconnections (sometimes called "synapses" like the brain ones) must be configured/personalized for every intended task. This process is called "learning" and is a critical part of the application.

There are multiple types of neural networks, depending on the neuron capabilities and the interconnections schemes.

A neuron is usually a simple operator, performing a non-linear function (decision, firing) of weighted inputs.

The connections between neurons define the different types of networks and their applications. The most important types of virtual, software based neuron networks in use today are:

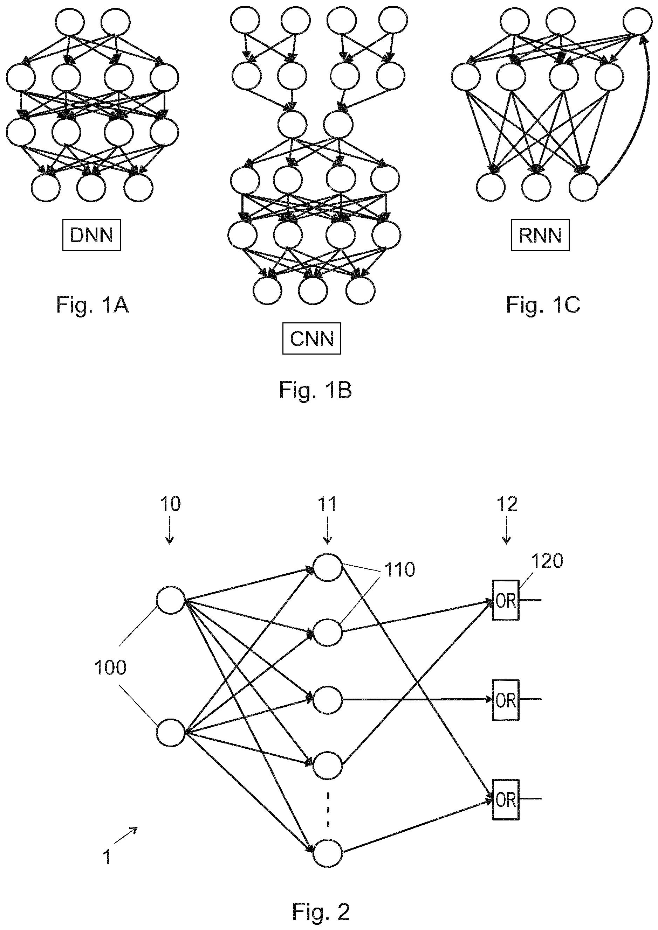

- DNN: deep neuron network, multi-layer feedforward network (Figure 1A);
- CNN: convolutional networks, using differentiated layers for local and global data processing (Figure 1B)
- RNN: recurrent networks, reusing outputs along with inputs in the weighted sum (Figure 1C);
- Etc.

Other networks may be used for spiking neuron networks, like fully connected neurons clusters.

Single or multi-layers DNN can support multiple neuron functions implementations. Most common are Perceptron (SLP/MLP) and Radial Basis Functions (RBF). Both have been proven universal function approximators. Beyond implementation details, these models differ by their learning requirements.

Hardware implementation represent a small subset of recent publications. They come in different types too:

- Hardware accelerators

- Analog, "brain like" networks

- Associative memories

- Digital networks of neurons/basic processors

- Etc

Hardware implementation of neural networks cover a limited spectrum of neural networks. While the software implementation running on Von Neuman machines are highly flexible, they are also slow and power hungry. Conversely, hardware implementation major interest lies in improving processing speed through very high parallelism capabilities, local memory deep usage, and can offer power/processing outstanding ratios.

Some examples of hardware based neural networks include:

- Tensor Processing Units (accelerators for parallel weight/data multipliers/accumulators and threshold detectors)

- Convolution accelerators;

- Processor in memory;

- Spiking neurons networks (such as event driven mixed behaviour)

Among the hardware-based, "edge" systems, circuits have already been proposed that implement a Restricted Coulomb Energy (RCE) architecture with a Radial Basis Function (RBF). This RCE/RBF architecture offers high performance (low latency, low power) and a good potential for DNN acceleration. They have been described in patent application US5'740'326.

RCE/RBF neural network circuits have a simple structure, as illustrated on Figure 2. The architecture of the RCE/RBF neural network circuit 1 contains three layers: an input layer 10, an hidden layer 11 and an output layer 12. The input layer 10 has a plurality of input terminals 100 for receiving the components (individual elements) of an input vector to be classified. The second or hidden layer 11 is formed by the neurons 110 themselves, which are fully interconnected to all input terminals of the input layer 11. The output layer 12 comprises a plurality of output terminals 120, and is sparsely connected to the hidden layer 11. Each neuron 110, in the hidden layer 11 projects its output to one and only one output terminal 120, in the output layer 12.

Each neuron 110 in the hidden layer 11 may have weight coefficients (synaptic weights) that are related to the components of a reference vector stored in the neuron. The weight may be identical, namely 1, so that all input components have the same weight.

Each neuron 110 in the hidden layer 11 computes a distance between the input vector and a reference vector stored in the neuron, and reacts (fires) if there is a match, for example if the distance is below a given threshold. Other nonlinear activation function might be used.

The match signal is input to only one output terminal 120 of the output layer 12.

The learning process of this type of network is simple and typically consists in adding or connecting new neurons, possibly with adjustments on firing thresholds.

This kind of networks is well suited for non-linear functions approximation, with typical applications in classification, small patterns detection, visual defects detection, hardware in the loop complex decisions, tracking, etc..

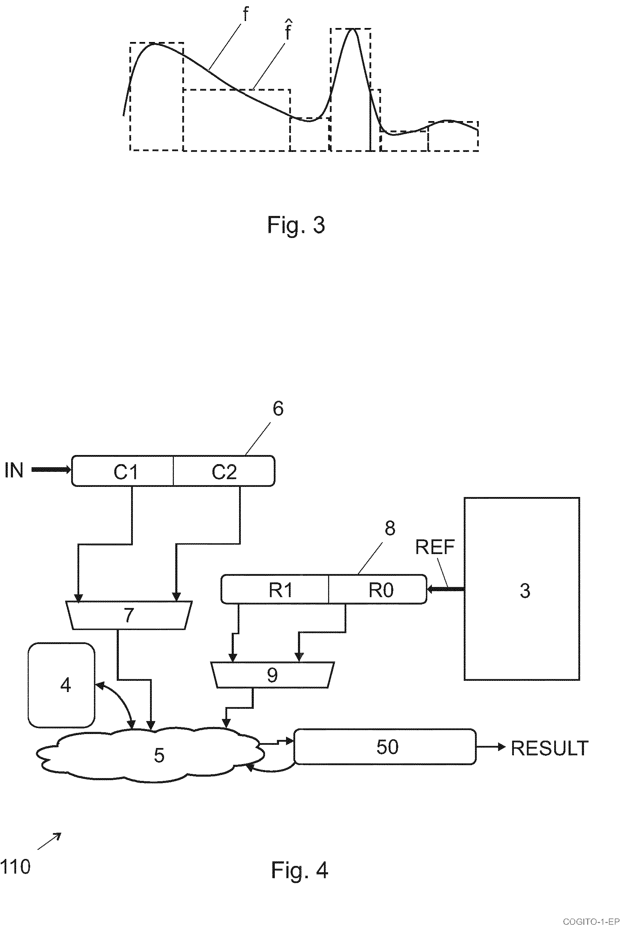

Figure 3 shows an example of the approximation $\hat{f}$ of a function $f$ with such a neural network.

A problem with existing RCE neural network circuits is their lack of flexibility with regard to the input vector that needs to be processed. They are usually designed for one specific length and depth of the input vector that needs to be classified, but are unable or ineffective at classifying input vectors with a different length or depth.

For example, a neural network used for classifying images or objects in images may need to be able to process either a vector corresponding to a low resolution, high colour image data, such as for example 24 bits per pixels (vector depth) and 512 pixels (vector length), or to a high resolution, Gray scale images with a depth of 8 bits per pixel and 4096 pixels.

Existing hardware based neural network circuits are usually designed for one type of input vectors only, and unable to classify input vectors having a different depth or length. Some hardware-based neural networks are designed for the maximal depth and maximal length of vectors that need to be classified, resulting in an improved flexibility, but also to a waste of portions of the memory and processing power that are not used when processing vectors with a lower length or depth.

Many neural networks have a fixed number of neurons. If less neurons are needed, the computational and memory resources of the unused neurons is wasted.

US 9,269,041 B2 discloses a neuron array with a plurality of neurons that have variable component length and variable depth, and that processes an input vector of variable component length and variable component depth that is input into the classifier for comparison against vectors stored in the classifier. This increases the flexibility of the neuron array and makes it suitable for processing and classifying different input vectors with different lengths and depths. However, this document does not solve the waste of memory, since each memory block is sized for the maximum length and for the maximum depth of components.

US6523018B1 describes a neural semiconductor chip with a plurality of neurons and one single external R/W memory block such as a RAM common to all neurons. Each neuron comprises a computation block, a register block, an evaluation block and a daisy chain block to chain the neurons. The external R/W memory is cut into slices for storing the prototype components of each neuron. Each slice can be written independently from the other slices. The depth and length of input vectors processed by the chip is predetermined.

A similar solution is described in EP1073013A1.

Brief summary of the invention

It is therefore an aim of the present invention to propose a RCE/RBF neural network circuit that can process input vectors of variable length and variable depth and in which the memory and/or processing power is better used than in the prior art.

In particular, an aim of the present invention is to propose a neural network circuit that reduces the quantity of memory needed while allowing a significant flexibility.

Another aim is to propose a neural network circuit which can be adapted to the required number of neurons.

According to the invention, these aims are achieved by means of a neural network circuit that comprises an input layer, an hidden layer and an output layer, the hidden layer having a plurality of neurons for processing an input vector with a variable number of components and variable component depth that is input into the input layer for comparison against reference vectors stored in said neurons, the circuit comprising a plurality of memory blocks;

> wherein each neuron is associated with one of said memory blocks, each memory block storing at least one said reference vector
> wherein each neuron is associated with a distance calculator for calculating a distance between the input vector and the said reference vector;
> wherein a subset of said neurons can share each said memory block,
> said neural network circuit being an RCE/RBF neural network circuit,

> each memory block being associated with a said subset of said neurons,
> the number of active neurons in said subset of said neurons sharing a memory block being configurable, the other neurons in said subset of said neurons being set as inactive.

The number of neurons that share each memory block can be modified, for example by setting a mode value into a mode register.

The proposed circuit thus allows to change the number of neurons according to the need of the targeted application.

The proposed circuit preferably also allows to change the number of components in the input vector, according to the need of the targeted application.

The proposed circuit also allows to change the component depth, i.e., the number of bits in each component, according to the need of the targeted application.

This solution comes from the realization that many applications that require a large number of neurons only need a limited number of components and/or limited component depth, while many applications that require a large number of components and/or a large component depth only need a limited number of neurons.

It is thus for example possible to trade off the number of components against their depth. In one example, it is possible to configure the circuit for accepting either an input vector with a first number of 16 bits components, or twice that number of 8 bits components.

It is also possible to trade off the number of neurons against the length of the input vectors.

The proposed neural network circuit thus allows to minimize the quantity of memory blocks needed for a given quantity of neurons, a given number of components per input vector (length) and a given component depth.

Each neuron may comprise a set of local configuration registers for defining the number of neurons with which the associated memory block is shared, the length and/or the depth of the components.

The set of local configuration registers may comprise at least one mode register determining the trade-off between said number of neurons sharing the same memory block and the number of components per input vector.

The set of local configuration registers may comprise a context register determining the number of bits of the reference components that can be accessed by the neuron in the associated memory block.

The number of neurons, the number of components in the input and reference vectors, and/or the depth of the components, can be easily defined and changed by setting values into local configuration registers in the neurons.

The neurons are configurable to be either activated or deactivated.

Each memory block may be associated with a subset of said neurons, wherein the number of active neurons in said subset that share said memory block is configurable, wherein the other neurons in said subset are deactivated.

Each memory block may be associated with four neurons; the total number of memory blocks is much larger, preferably greater than 64.

Each memory block may store a plurality of words at successive memory addresses, wherein each word stores a number of reference components that is configurable.

The circuit may further comprise a multiplexer for selecting at each instant the portion(s) of each word that needs to be used by the distance calculator.

A configuration register may determine the type of distance that is computed by the distance calculator.

The distance calculator can be arranged for iteratively computing the difference between corresponding components of the input vector (IN) and of the reference vector (REF). Therefore, the dimension of the distance calculator does not need to be adapted to the maximal possible length of the input or reference vector.

Each neuron further comprises a distance register which may be used for storing intermediate and final distances between selected input and reference components that are calculated.

The invention is also related to a system comprising:

at least one neural network circuit as previously described or as recited in the claims;
at least one sensor;
a processing unit arranged for receiving data from said sensor, pre-processing this data, so as to generate an input vector;
an interface between said processing unit and neural network circuit for transmitting said input vector to said neural network circuit, and for transmitting a result from said neural network circuit to said processing unit.

The processing unit may comprise a FPGA for extracting features from said data and/or for processing the result.

The processing unit may comprise a processor. The processor may control the FPGA.

The system may comprise a plurality of said neural network circuit in parallel.

The interface between the processing unit and the neural network circuits may comprising a memory bus, so that the memory blocks may be written or read by addressing the memory space of the processing unit.

The reference vectors may be transmitted to the neurons by addressing the memory space of the processing unit.

The memory bus may comprise a first memory bus for transmitting said input vector (IN) to the neural network circuit(s), and a second memory bus for transmitting the result delivered by the neural network circuits to the processing unit.

The system may further comprise a magnetic memory in which reference vectors and configuration parameters of all the vectors maybe stored when the system is shutdown.

The system may comprise a plurality of sub-components that are packed as a system in package (SIP).

Brief Description of the Drawings

The invention will be better understood with the aid of the description of an e example illustrated by the figures, in which:

Fig. 1A to 1C schematically illustrate various types of neural network structures according to the prior art;

Figure 2 schematically shows a structure of a RCE/RBF neural network circuit as known in the prior art and also used in the present invention;

Figure 3 illustrates the approximation of a waveform *f* with a neural network;

Figure 4 is a block diagram illustrating some blocks of a neuron and one associated memory block, according to the present invention;

Figures 5A to 5D illustrate different possibilities of sharing one memory block between a plurality of neurons;

Figure 6 is a block diagram schematically illustrating a system comprising one neural network circuit according to the invention; and

Figure 7 is a block diagram schematically illustrating a system comprising a plurality of neural network circuits according to the invention.

Detailed Description

The RCE/RBF neural network circuit of the present invention may have the previously described structure of Figure 2; some aspects of the invention lie in the neurons 110 of the hidden layer 11.

Figure 4 illustrates such a neuron 110 in a neural network circuit 1 with an associated shared memory 3 according to the invention. The circuit 1 comprises a plurality of such neurons 2; all the neurons in the circuit may have the same structure.

The neural network circuit 1 is preferably implemented as a single chip. A system may comprise one or a plurality of such chips 1, in order to increase the number of available neurons. As we will describe, the one or plurality of chips 1 may be associated with one processor 21 and possibly other components in a single system, possibly in a SIP package. A system comprising more than one such neural network circuits will be called a multichip system in the following of the description.

Each neuron 110 has access to one memory block 3 and includes a distance calculator 5 and a set of local configuration registers 4.

Each memory block 3 can be shared by some but not all the neurons of the neural network circuit 1. In one example, the neural network circuit 1 can comprise 2048 neurons, and each memory block 3 can be shared by one, two or four neurons, as will be described. Other number of neurons in the circuit 1 could be considered, as well as sharing memory blocks between a different number of neurons.

The memory block 3 may be for example a RAM or SRAM memory, or a portion of such a memory, the portion being used only by predefined associated neurons.

All neurons could read in parallel from a wide memory in which the memory blocks are defined. Using a single memory component could save power. However, the speed performance will be reduced since each neuron must perform multiple access in read/write have at each cycle.

Using narrow memory blocks, it is possible to find a balance between speed and power.

The memory block 3 comprises words, for example 512 words of 16 bits each. Each word has an address. Each word can store one or a plurality of components of a reference vector. In one example, each word can store either one 16 or 12 bits components, or two 8 bits components of one reference vector. The reference vector is formed by some or all the components in the memory block 3.

Memory blocks with a different number of words (lines) and a different number of bits in each line (width; related to the depth of the components) could be considered.

The distance calculator 5 associated with each neuron calculates a distance R between a reference vector REF read from the portion of the memory block 3 assigned to the neuron 110 and an input vector IN that is input to the first layer 10 of the neural circuit and to the neuron. The distance calculator preferably iteratively computes and adds the distance between corresponding components of the reference vector REF and of the input vector REF, and integrates those differences, as will be described later. An input register 6 stores successive components of the input vector received over a bus. A reference register 8 stores components of the reference vector successively read from the memory bloc 3.

The distance calculator 5 uses a distance register 50 as an accumulator for storing the intermediate and final distances between selected input and reference components that are calculated. For any firing neuron, a 'firing status' is sent to output terminal 120 and, concurrently the result RESULT is propagated for a winner-takes all test through a bus fusion mechanism.

The distance calculator 5 may be for example a Manhattan calculator, a Chebyshev calculator, etc. In one embodiment, the type of distance calculation that is performed by the distance calculator can be selected with the set of local configuration registers 4.

Non-iterative distance calculators may also be considered; however, the use of an iterative calculator avoids the duplication of logic circuits that remains partly unused when the number of components in the input vector is reduced.

One distance calculator 5 is provided for each neuron. In another example, one distance calculator 5 is shared between several neurons; only the distance register 50 still needs to be individual for each neuron. This divides the size of the combinational logic block used for this distance calculation by the number of neurons assigned to each memory block 3.

As already mentioned, the input vector IN that needs to be classified can correspond either to one 16 or 12 bits components C, or to two 8 bits components C1:C0, for example. A multiplexer 7 can select either the 8-bit input component C0 in the first half of the input register 6, or the 8-bit input component C1 in the second half of this input register, or the 12- or 16-bit input component C0 in both halves of this input register.

Similarly, the memory block 3 contains a plurality of words at different addresses, each word corresponding for example to one 16 or 12 bits components rX0, or to two 8 bits components rX1:rX0, where X indicates the corresponding neuron NX. A second multiplexer 9 can select either the 8-bit reference component rX0 in the first half of the reference register 8, or the 8-bit reference component rX1 in the second half of this reference register, or the 12- or 16-bit reference component rX0 in both halves of this reference register 8. The addition at each iteration step is performed between the respective components that are selected and delivered by the multiplexers 7, 9.

Each memory block 3 is shared between a configurable number N of neurons X, for example between 1 to 4 neurons. This number N can be modified after manufacturing of the circuit, for example by storing an appropriate mode in one of the local configuration registers 4 of the neuron 110. The different neurons that can share one memory block 3 can all access different portions of that memory block over a common interface, simultaneously from one memory component, or successively from different components.

In the illustrated example, the circuit can be configured either in a first mode with four neurons 110 per memory block 3, in a second mode with two neurons per memory block or in a third mode with one neuron per memory block. Other modes and other sets of modes could be considered.

The following example will refer to the already introduced memory block having 512 words of 16 bits each; other dimensions of the memory blocks could be considered. In this example, the circuit comprises up to 2048 neurons. A higher number of neurons could be obtained by combining a plurality of circuits in a multichip configuration.

In a first mode, each memory block 3 is shared by four neurons 110. Each word (line) of the memory block holds 1 or 2 components RX0 or R1 of a reference vector associated with one of the sharing neurons. Each neuron 110 can thus access a portion of the memory block 3 that contains maximum 256 8 bits components RX or 128 components RX with 12 or 16 bits. The circuit comprises for example 512 memory blocks and thus for example 2048 neurons N0, N1...N2047 that can be activated. The bit depth of the components is programmable from 8 to 16 bits.

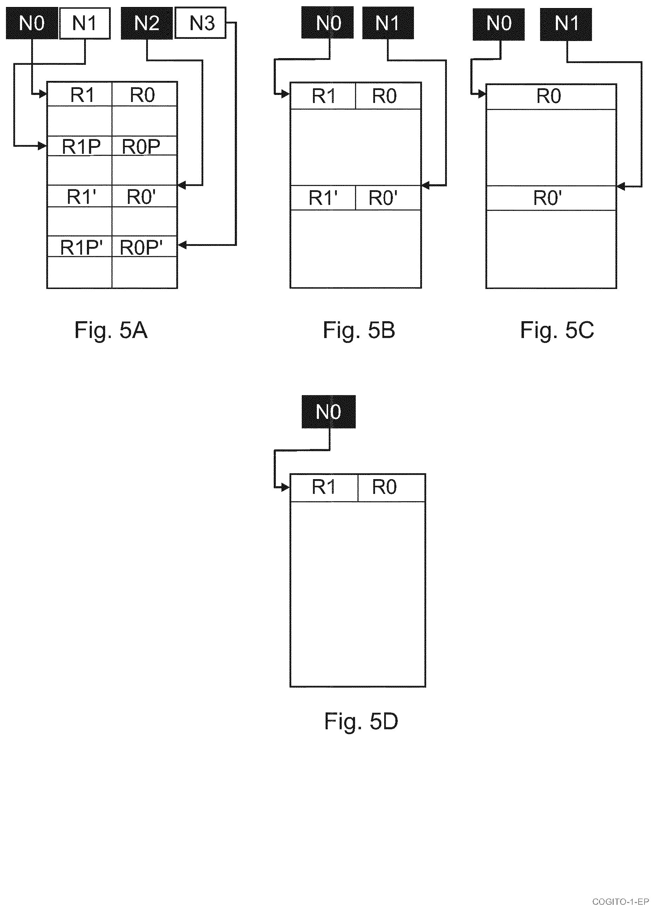

Figure 5A illustrates an example of sharing of one memory block 3 between 4 neurons N0, N1, N2 and N3, the depth of the components being 8 bits. The first quarter of the memory blocks stores a first reference vector R1,R0, consisting of the components r0,0 to r0,127, and used by the neuron N0; the second quarter stores a second reference vector R1P,R0P, consisting of the components r0p,0 to r1P,127, and used by the neuron N1; the third quarter of the memory blocks stores a third reference vector R1',R0'consisting of the components r0',0 to r1',127, used by the neuron N2; and the fourth quarter stores a fourth reference vector R1P',R0'Pconsisting of the components r0P',0 to r1P',127.. used by the neuron N3.

It is also possible to share one memory block 3 between 4 neurons N0, N1, N2 and N3, the depth of the components being 12 or 16 bits. In that case, each line (word) of the memory block 3 would store only one component r, instead of two, and the length of the reference vector (number of components) would be 128 instead of 256.

In a second mode with two neurons 110 per memory block 3, each neuron can access to one 8 bits reference vector RX of maximum 512 components, or to one reference vector RX of maximum 256 components with 12 or 16 bits. Each memory block 3 is shared between 2 neurons 110, and the two other neurons associated with each memory block are set as inactive. There are therefore 1024 available neurons N0, N1...N1023. The bit depth of the components is programmable:

   a. 8 bits depth. In this case the maximum number of components r is 512.
   b. 12 bits depth. In this case the maximum number of components r is 256.
   c. 16 bits depth. In this case the maximum number of components r is 256.

Figure 5B illustrates the sharing of the memory block 3 in two halves. The first half stores one reference vector R1,R0,.. used by the neuron N0 while the second half stores one reference vector R1',R0', used by the neuron N1. The components r of each reference vector R have 8 bits in this example, so that each word of the memory block stores two components r.

Figure 5C illustrates the sharing of the memory block 3 in two halves. The first half stores one reference vector R0 used by the neuron N0 while the second half stores one reference vector R1 used by the neuron N1. The components of each reference vector have 16 bits in this example, so that each word of the memory block stores only one component r.

In a third mode with one neuron 110 per memory block 3, each neuron can use the complete memory block 3, which can store one reference vector with 1024 8 bits components, or 512 12- or 16-bits components. The situation is illustrated on Figure 5D. This mode is well adapted for example for the tracking of features in a series of video frames with 30X30 pixels.

There are 512 available neurons N01, N1,.. N511. Each memory block 3 is used only by one neuron 110, and the three other neurons that can access this memory block are set as inactive.

Therefore, depending on the mode that is configured, one can trade off the number of neurons against the number of components per input vector. Moreover, at least in some modes, it is possible to trade off the number of components of the vector against their depth (number of bits).

Local Configuration Registers

As already mentioned, each neuron 110 comprises a set of local configuration registers 4.

The set of local configuration registers 4 may include a mode register that define the mode in which the neuron is operating, i.e. the number of neurons between each the associated memory block 3 is shared, and thus the portion of the memory block the neuron 110 can use.

The set of local configuration registers 4 may include a local context register which determines the context of the neuron. The local context may for example determine the depth of the reference components in the associated memory block 3.

Input vectors to be recognized are classified by contexts and categories. A context is a set of data, such as neuron weights and neuron associated parameters, produced or modified by the training of the neural network. In one example, up to 64 different contexts are available and can be defined for each neuron.

To illustrate this notion of context, one could imagine an example where one neural network system is trained with six different contexts that can be selected depending on the situation:

- -A first context might be used for simple authentication with an image taken with daily light, using a standard RGB camera and possibly an additional infrared camera for spoofing and liveness detection.

- - A second context could be used for night images captured with an infrared sensor. In case of detection of presence or movement, a second image could be captured with the standard RGB sensor and an illumination system, such as a flash; the neural network will uses context 1 above for analysing this new image.

- A third context could be used for images captured in low light with a standard camera, whereas the training of the neural network is adapated to low light and low contrast images.

- A fourth context could be used for speech recognition

- A fifth context could be used for face recognition based on a set of features extracted from an image with a feature extraction system.

- A sixth context could be used for person authentication

- A seventh context could be used for OCR recognition

- etc..

- Therefore, by selecting a suitable context at any given time, and switching between different contexts, a neural network system could be adapted very quickly to different classification tasks.

Neurons with different contexts can store reference components with different depths. For example, half of the neurons can be committed with a local component depth of 8 bits while the other half of the neurons could have a different context, corresponding to a component depth of 12 bits.

During the recognition phase every active neuron 110 compares the value of its local context register to the value of a global context register; if these values differ, the distance calculation will be disabled.

Some neurons 110 may operate only with components of a given depth, for example 8 bits components, and do not need a local context register.

As previously indicated, neurons can be active or inactive, for example when the memory blocks are shared by less than four neurons. One local register indicates whether a specific neuron is active or not.

Some neurons may be associated with one category; the category may be stored in one register.

Distance calculator

As previously indicated, each neuron 110 comprises a distance calculator 5 for computing the distance between an input vector IN and the reference vector REF stored in the portion of the memory block 3 accessible in the given mode. The input vector contains C components coded on 8 to 16 bits and is sent in parallel to all the neuron units 3. Only active neurons that fit the global context compute a distance.

The distance that is computed may depend on the implementation, and/or be programmable by writing a value in a calculation mode register in the set of local registers 4.

In one example, the computed distance is the arithmetic difference between vector components or a gap between enumerated code words (Hamming distance). In order to give more flexibility, the components depth is important. For instance:

- 8 bits components may be repacked within 12/16 bits words in order to emulate weight coefficients.

- Pixel components may be packed in a single word, with arithmetic priority on luminance (YCrCb) or chrominance (CbCrY) according to the application needs.

- Clever coding may be used to handle enumerations with equal or desired distances. For example, a colour component may be coded with green=001, blue=010, red =111, so that the Hamming distance is always 2 between any 2 colours in this enumeration.

The overall distance Dist between the input vector and the reference vectors may be computed as the aggregation of the components' gaps Dint(i). This distance is calculated in a serial manner, starting by the gap between the first components (i=1).

All gaps are computed as absolute difference (a) or Hamming (h) as defined by the distance mode field (distance_mode) in the global configuration register:

$$\checkmark \quad Dint(i) = |refcomp_i - incomp_i| \quad (a)$$
$$\checkmark \quad Dint(i) = \sum_{j=1}^{w} (refcomp_i[j] \wedge incomp_i[j]) \quad (h)$$

where *refcomp$_i$* is the i-th component of the reference vector and *incomp$_i$* is the i-th component of the input vector.

The type of calculated distance may be set in a distance accumulator field in the global configuration register. In one example, at least two different types of vector distances may be selected with this register, such as for example the Manhattan distance and the Chebyshev distance.

The distance calculation may be interleaved in order to share not only the memory block 3 but also the distance calculator 5 between neurons 110.

Two 8 bits components distances may be computed in parallel and then summed together before accumulation.

The distance between an input vector and a reference vector may be computed iteratively between successive components of the input vector and of the reference vector.

Third layer

Each neuron 110 that detects a match between the input vector and his reference vector emits a firing flag. Firing flags received by one output terminal 120 are or-ed together. For example, in Figure 2, the first output terminal 120 on top of the third layer 12 is activated when either the second or the fourth neuron 110 of the hidden layer are fired.

After this step, a Winner Take All process can be started to search for the lowest distance neuron 110. This process may be executed by the processor 21, possibly in several steps. The first step consists in calculating the smallest distance between the input vector and a reference vector at neural network circuit 1 level. If required, in case of multichips, a second step, based on the same principle, consists in evaluating the smallest distance among the multiple chips (multiple neural network circuits) 1.

The different levels/steps of the Winner Take All process may each be implemented in different ways.

The first level of winner takes all process is performed internally in each neural network circuit 1 to look for the local winner. This computation can use the fast internal logic and short interconnections within the chip 1. A pure combinational system may be implemented.

The second level is a search for the winner between different neural network circuits 1, if the system comprises more than one such circuit 1. This second level may be implemented in different ways.

In a very small configuration, comprising only a limited number of different chips 1 interconnected in microprocessor interface mode, the winner takes all process between chips may be performed in software. A processor or other processing units read the local winners and compare them. The result may be fed back to the neural network circuits 1 through dedicated instructions. This mode is referred to as the "manual mode".

In a small configuration, with typically less than 4 to 8 neural network circuits 1, each circuit 1 performs the first level in parallel, then the winner is searched between the different circuits. It is possible to perform a electrical wired-comparison of the outputs of the different circuits. This works preferably on a bit by bit, most significant bit (MSB) to least

significant bit (lsb) sequence. This is a "democratic" process where each neural network circuit 1 is autonomous, and may be performed either in microprocessor or parallel interface modes. A signal is used in this mode to synchronize the different neural network circuits.

In a large, hierarchical configuration, a pyramid of controllers, such as for example FPGAs, may run in parallel, each determining the winner among a subset of the circuits 1. The results of each such controller is provided to a higher-level controller, until the global winner is determined and possibly fed back to all circuits 1 with the corresponding distance. This is preferably performed in parallel interface mode, using FPGAs able to cycle accurate capture and force signals.

Once all the distances between the input vector and the different reference vectors are calculated, a status computation process is started. The computation of this status preferably requires a verification of a cat_difference flag that indicates whether all the firing neurons belong to the same category.

The result is unknown if no neuron 110 is fired. Else, categories of all firing neurons are and-ed together bit by bit, in order to make sure that all firing neurons 110 which are compared belong to a same category A first category comparison may be performed in the neural network circuit, to generate a firing result and a merged category. In case of multichip system, a second detection may be performed between the multiple circuits to merge all the categories and compare the result with the category in every firing neuron of every neural network circuit.

The result is fed back to every neuron 110, which compares it with its own category and returns a flag "existant_flag". These flags are or-ed together to compute the status: recognized if all categories are identical, uncertain if there are multiple categories among the firing neurons.

In another implementation, involving a plurality of neural network circuits 1 (multichip system), the categories are compared between mergers from different neural network circuits using a 2 steps wired-and mechanism. First, the resulting bit by bit 'and category' bus is fed back to all the firing neurons and the existant_cat flag is computed. Existant_flag is then merged and read back using a wired-and between chips to compute the final status.

<u>System</u>

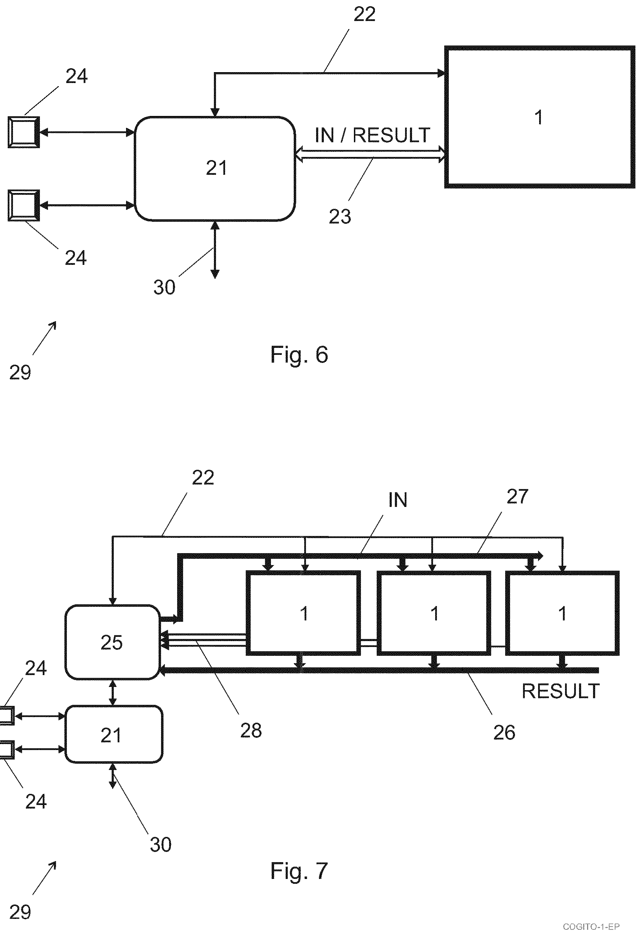

Figure 6 schematically illustrates a first example of system (or complete circuit) comprising a neural network circuit 1. The circuit 1 is controlled by a processor 21 that can write input vectors in the input terminals 100 of the input layer, read and write configuration registers, and read the results in the output terminals 120 over a memory interface 23, for example a bus, and a serial processor interface 22. The input vectors and results that are transmitted over the memory interface 23 may be encrypted at the sending side and decrypted at the receiving side.

Since the interface between the processing unit and the neural network circuits comprises a memory bus, the memory blocks may be written or read simply by addressing the memory space of the processor.

The processor 21 can access to one or a plurality of sensors 24, such as without limitations an image sensor, a microphone, a biometric sensor, a Lidar, etc, and preprocess digital data measured with this sensor(s) in order to extract features from the signal received from the sensor. The features are packed into an input vector which is sent to the neural network circuit 1 in order to be classified.

The processor 21 can further access a network 30, such as for example a local area network (LAN), a Wireless Local Area Network (WLAN), a cellular network, a personal area network (PAN, such as for example Bluetooth, Zigbee, etc). and/or the Internet. Input vectors and/or results output by the neural network circuit can be received respectively sent over the network 30.

The output bus from the neural network circuits is also used to perform a fast Winner Take All process using an efficient, electrically assisted, parallel process. At SIP level, embedded FPGA may interface directly with the custom neural network circuits to perform this process and exchange results on an hidden bus, and exchange seamlessly with the external world over standard interfaces/networks.

In this example, the neural network circuit preferably comprises a logic circuit (not shown) for determining the output terminal 120 that receives at least one firing signal from at least one of the neurons 110 and having the smallest distance to the input vector. The input vector is classified with the winner takes it all approach. A ranked list of following output terminals can also be determined.

The system may include a semi-permanent memory, such as a magnetic memory (MRAM) in which reference vectors and configuration parameters of all the vectors are stored before the circuit 1 is shutdown, and from which those data are read after boot. Alternatively, the reference vectors and configuration values may be stored in an external memory.

The transmission frequency over the interface 23 may be configured in order to adapt the power requirements and speed of the system to the requirements.

The various modules or circuits of the system may be packed into one single component, for example as a system in package (SIP). For example, one or a plurality of processors 21, one or a plurality of neural network circuits 1 and one or a plurality of controlers 25 can be packaged in a SIP with significant advantages in term of compactness because distance bus 26 which is the largest bus of the system becomes internal, and/or in term of performances because the fusion process which is required for multichips winner-takes-all becomes much easier to implement thanks to drastic shrink of parasitic capacitors compared to an approach with discrete components.

Figure 7 schematically illustrates a second example of system (or complete circuit) comprising a plurality of neural network circuits 1 in parallel, in order to increase the number of neurons and/or the number of components of the input vector. The different neural network circuits 1 are controlled by a circuit 25, such as a FPGA or Asic, which is itself controlled by a processor 21 similar to the processor of Figure 6. The processor 21 can access sensors 24 and a network as described with the example of Figure 7.

The circuit 25 accesses the neural network circuits 1 over a serial processor interface 22, and over two unidirectional memory interfaces: an input vector interface 27 for writing input vectors into the input terminals 100 of the circuits 1, and a result interface 26 for reading results delivered by the circuits 1. The input vectors and results that are transmitted over the interfaces 26, 27 may be encrypted at the sending side and decrypted at the receiving side

The circuit 25 compares the results from the different circuits 1, taking into account the categories.

The system may include a semi-permanent memory, such as a magnetic memory (MRAM) in which reference vectors and configuration parameters of all the vectors are stored before the circuit 1 is shutdown, and from which those data are read after boot. Alternatively, the reference vectors and configuration values may be stored in an external memory.

The transmission frequency over the interface 23 may be configured in order to adapt the power requirements and speed of the system to the requirements.

The various modules or circuits of the system may be packed into one single component, for example as a system in package (SIP).

Additional Features and Terminology

Depending on the embodiment, certain acts, events, or functions of any of the algorithms described herein can be performed in a different sequence, can be added, merged, or left out altogether (for example, not all described acts or events are necessary for the practice of the methods). Moreover, in certain embodiments, acts or events can be performed concurrently, for instance, through multi-threaded processing, interrupt processing, or multiple processors or processor cores or on other parallel architectures, rather than sequentially. In addition, different tasks or processes can be performed by different machines or computing systems that can function together.

The various illustrative logical blocks and modules described in connection with the examples disclosed herein can be implemented or performed by a machine, a microprocessor, a state machine, a digital signal processor (DSP), an application specific integrated circuit (ASIC), a FPGA, or other programmable logic device, discrete gate or transistor logic, discrete hardware components, or any combination thereof designed to perform the functions described herein. A hardware processor can include electrical circuitry or digital logic circuitry configured to process computer-executable instructions. In another example, a processor includes an FPGA or other programmable device that performs logic operations without processing computer-executable instructions. A processor can also be implemented as a combination of computing devices, e.g., a combination of a DSP and a microprocessor, a plurality of microprocessors, one or more microprocessors in conjunction with a DSP core, or any other such configuration. A computing environment can include any type of computer system, including, but not limited to, a computer system based on a microprocessor, a mainframe computer, a digital signal processor, a portable computing device, a device controller, or a computational engine within an appliance, to name a few.

The steps of a method, process, or algorithm described in connection with the examples disclosed herein can be embodied directly in hardware, in a software module stored in one or more memory devices and executed by one or more processors, or in a combination of the two. A software module can reside in RAM memory, flash memory, ROM memory, EPROM memory, EEPROM memory, registers, hard disk, a removable disk, a CD-ROM, or any other form of non-transitory computer-readable storage medium, media, or physical computer storage known in the art. An example storage medium can be coupled to the processor such that the processor can read information from, and write information to, the storage medium. In the alternative, the storage medium can be integral to the processor. The storage medium can be volatile or nonvolatile. The processor and the storage medium can reside in an ASIC.

Conditional language used herein, such as, among others, "can," "might," "may," "e.g.," and the like, unless specifically stated otherwise, or otherwise understood within the context as used, is generally intended to convey that certain embodiments include, while other embodiments do not include, certain features, elements or states. Thus, such conditional language is not generally intended to imply that features, elements or states are in any way required for one or more embodiments or that one or more embodiments necessarily include logic for deciding, with or without author input or prompting, whether these features, elements or states are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. Further, the term "each," as used herein, in addition to having its ordinary meaning, can mean any subset of a set of elements to which the term "each" is applied.

**Claims**

1. A neural network circuit (1) that comprises an input layer (10), an hidden layer (11) and an output layer (12), the hidden layer having a plurality of neurons (110) for processing an input vector (IN) with a variable number of components (C0, C1, ..) and variable component depth that is input into the input layer (10) for comparison against reference vectors (REF) stored in said neurons, the circuit comprising a plurality of memory blocks (3);

   wherein each neuron (110) is associated with one of said memory blocks (3), each memory block storing at least one said reference vector

   wherein each neuron (110) is associated with a distance calculator (5) for calculating a distance between the input vector (IN) and the said reference vector (REF);
   **characterized in that**

   said neural network circuit (1) is a Restricted Coulomb Energy, RCE, architecture with a Radial Basis Function, RBF,
   each memory block being associated with subset of said neurons, and **in that**
   the number of active neurons in said subset of said neurons sharing a memory block (3) is configurable, the other neurons in said subset of said neurons being set as inactive.

2. The circuit of claim 1, wherein at least one distance calculator (5) is shared between a plurality of neurons (110), and each neuron includes an individual distance register (50).

3. The circuit of one of the claims 1 or 2, each neuron (110) further comprising a set of local configuration registers (4).

4. The circuit of claim 3, said set of local configuration registers (4) comprising at least one mode register arranged for determining the number of neurons (110) between which the associated memory block (3) is shared.

5. The circuit of one of the claims 3 or 4, said set of local configuration registers (4) comprising at least one mode register arranged for determining the number of neurons (110) between which the associated memory block (3) and the distance calculator is shared.

6. The circuit of one of the claims 4 to 5, said mode register being arranged for determining a trade-off between said number of neurons (110) sharing the same memory block (3) and the number of components per input vector.

7. The circuit of one of the claims 3 to 6, said set of local configuration registers (4) comprising a context register arranged for determining the number of bits of the reference components that can be accessed by the neuron in the associated memory block (3).

8. The circuit of one of the claims 1 to 7, each memory block (3) arranged for storing a plurality of words at successive memory addresses, wherein each word stores a number of reference components that is configurable.

9. The circuit of claim 8, each neuron (110) further comprising a multiplexer (8) arranged for selecting the portion(s) of each word that needs to be used by the distance calculator (5).

10. The circuit of one of the claims 1 to 9, wherein the type of distance that is computed by the distance calculator (5) can be selected with a register.

11. The circuit of one of the claims 1 to 10, wherein said distance calculator (5) is arranged for iteratively computing the difference between corresponding components of the input vector (IN) and of the reference vector (REF).

12. A system (29) comprising:

   at least one neural network circuit (1) according to one of the preceding claims;
   at least one sensor (24);
   a processing unit (21; 25) arranged for receiving data from said sensor (24), pre-processing this data, so as to generate an input vector (IN);
   an interface (23; 26, 27) between said processing unit (21) and neural network circuit (1) for transmitting said input vector (IN) to said neural network circuit (1), and for transmitting a result (RESULT) from said neural network circuit (1) to said processing unit (21; 25).

13. The system of claim 12, said processing unit comprising a FPGA (25) arranged for extracting features from said data and/or for processing the result.

14. The system of one of the claims 12 or 13, comprising a plurality of said neural network circuit (1) in parallel.

15. The system of one of the claims 12 to 14, said interface comprising a first memory bus (27) arranged for transmitting said input vector (IN) to said neural network circuit (1), and a second memory bus (26) arranged for transmitting said result (RESULT) from said neural network circuit (1)

16. The system of one of the claims 12 to 14, said interface comprising a first memory bus (27) arranged for transmitting said input vector (IN) to said neural network circuit (1), and a second memory bus (26) arranged for transmitting said result (RESULT) from said neural network circuit (1) or for determining the neuron having the smallest distance to the input vector (IN).

17. The system of one of the claims 12 to 16, further comprising a magnetic memory (MRAM) in which reference vectors and configuration parameters of all the vectors maybe stored when the system is shutdown.

18. The system of one of the claims 12 to 17, comprising a plurality of sub-components that are packed as a system in package (SIP).


**Patentansprüche**

1. Eine neuronale Netzwerkschaltung (1), welche eine Eingabeschicht (10), eine verborgene Schicht (11) und eine Ausgabeschicht (12) umfasst, wobei die verborgene Schicht eine Vielzahl von Neuronen (110) aufweist zum Verarbeiten eines Eingabevektors (IN), mit einer variablen Anzahl von Komponenten (C0, C1, ...) und einer variablen Komponententiefe, welcher in die Eingabeschicht (10) zum Vergleich mit in den besagten Neuronen gespeicherten Referenzvektoren (REF) eingegeben wird, wobei die Schaltung eine Vielzahl von Speicherblöcken (3) umfasst;

worin jedes Neuron (110) einem der besagten Speicherblöcke (3) zugeordnet ist, wobei jeder Speicherblock mindestens einen besagten Referenzvektor speichert;
worin jedes Neuron (110) einem Distanzrechner (5) zum Berechnen einer Distanz zwischen dem Eingangsvektor (IN) und dem besagten Referenzvektor (REF) zugeordnet ist;
**dadurch gekennzeichnet, dass**
die besagte neuronale Netzwerkschaltung (1) eine Architektur mit begrenzter Coulomb-Energie (RCE) mit einer Radialbasisfunktion (RBF) ist,
wobei jeder Speicherblock mit einer Teilmenge von besagten Neuronen assoziiert ist,
und dass
die Anzahl der aktiven Neuronen in der besagten Teilmenge der besagten Neuronen, die sich einen Speicherblock (3) teilen, konfigurierbar ist, wobei die anderen Neuronen in der besagten Teilmenge der besagten Neuronen als inaktiv gesetzt sind.

2. Schaltung gemäss Anspruch 1, worin mindestens ein Distanzrechner (5) von einer Vielzahl von Neuronen (110) geteilt wird, und worin jedes Neuron (110) einen individuellen Distanzregister (50) aufweist.

3. Schaltung gemäss einem der Ansprüche 1 oder 2, wobei jedes Neuron (110) zudem einen Satz lokaler Konfigurationsregister (4) umfasst.

4. Schaltung gemäss Anspruch 3, wobei der besagte Satz lokaler Konfigurationsregister (4) mindestens ein Modusregister umfasst, welches dazu eingerichtet ist, die Anzahl der Neuronen (110) zu bestimmen, zwischen denen der zugehörige Speicherblock (3) geteilt wird.

5. Schaltung gemäss einem der Ansprüche 3 oder 4, wobei der besagte Satz lokaler Konfigurationsregister (4) mindestens ein Modusregister umfasst, welches dazu eingerichtet ist, die Anzahl der Neuronen (110) zu bestimmen, zwischen denen der zugehörige Speicherblock (3) und der Distanzrechner geteilt werden.

6. Schaltung gemäss einem der Ansprüche 4 bis 5, wobei das besagte Modusregister dazu eingerichtet ist, einen Kompromiss zwischen der besagten Anzahl der Neuronen (110), die denselben Speicherblock (3) teilen, und der Anzahl der Komponenten pro Eingangsvektor zu bestimmen.

7. Schaltung gemäss einem der Ansprüche 3 bis 6, wobei der besagte Satz lokaler Konfigurationsregister (4) ein Kontextregister umfasst, das dazu eingerichtet ist, die Anzahl der Bits der Referenzkomponenten zu bestimmen, auf welche das Neuron im zugehörigen Speicherblock (3) zugreifen kann.

8. Schaltung gemäss einem der Ansprüche 1 bis 7, wobei jeder Speicherblock (3) dazu eingerichtet ist, eine Vielzahl von Wörtern an aufeinanderfolgenden Speicheradressen zu speichern, worin jedes Wort eine Anzahl von Referenzkomponenten speichert, die konfigurierbar ist.

9. Schaltung gemäss Anspruch 8, wobei jedes Neuron (110) zudem einen Multiplexer (8) aufweist, der dazu eingerichtet ist, der Teil bzw. die Teile jedes Worts auszuwählen, der bzw. die vom Distanzrechner (5) verwendet werden muss bzw. müssen.

10. Schaltung gemäss einem der Ansprüche 1 bis 9, worin die Art der vom Distanzrechner (5) berechneten Distanz über ein Register ausgewählt werden kann.

11. Schaltung gemäss einem der Ansprüche 1 bis 10, worin der besagte Distanzrechner (5) dazu eingerichtet ist, die Differenz zwischen entsprechenden Komponenten des Eingangsvektors (IN) und des Referenzvektors (REF) iterativ zu berechnen.

12. Ein System (29), umfassend:

mindestens eine neuronale Netzwerkschaltung (1) gemäss einem der vorhergehenden Ansprüche;
mindestens einen Sensor (24);
eine Verarbeitungseinheit (21; 25), welche zum Empfangen von Daten vom besagten Sensor (24) und zum Vorverarbeiten dieser Daten eingerichtet ist, um einen Eingabevektor (IN) zu erzeugen;
eine Schnittstelle (23; 26, 27) zwischen der besagten Verarbeitungseinheit (21) und der neuronalen Netzwerkschaltung (1) zum Übertragen des besagten Eingangsvektors (IN) an die besagte neuronale Netzwerkschaltung (1) und zum Übertragen eines Ergebnisses (RESULT) von der besagten neuronalen Netzwerkschaltung (1) an die besagte Verarbeitungseinheit (21; 25).

13. System gemäss Anspruch 12, wobei die besagte Verarbeitungseinheit ein FPGA (25) umfasst, welches zum Extrahieren von Merkmalen aus den besagten Daten und/oder zum Verarbeiten des Ergebnisses eingerichtet ist.

14. System gemäss einem der Ansprüche 12 oder 13, umfassend eine Vielzahl von besagten parallel geschalteten neuronalen Netzwerkschaltungen (1).

15. System gemäss einem der Ansprüche 12 bis 14, wobei die besagte Schnittstelle einen ersten Speicherbus (27) umfasst, welches zum Übertragen des besagten Eingangsvektors (IN) an die besagte neuronale Netzwerkschaltung (1) eingerichtet ist, und einen zweiten Speicherbus (26) umfasst, welches zum Übertragen des besagte Ergebnisses (RESULT) von der besagten neuronalen Netzwerkschaltung (1) eingerichtet ist.

16. System gemäss einem der Ansprüche 12 bis 14, wobei die besagte Schnittstelle einen ersten Speicherbus (27) umfasst, welches zum Übertragen des besagten Eingangsvektors (IN) an die besagte neuronale Netzwerkschaltung (1) eingerichtet ist, und einen zweiten Speicherbus (26) umfasst, welches zum Übertragen des besagten Ergebnisses (RESULT) von der besagten neuronalen Netzwerkschaltung (1) oder zum Bestimmen des Neurons mit dem geringsten Abstand zum Eingangsvektor (IN) eingerichtet ist.

17. System gemäss einem der Ansprüche 12 bis 16, zudem umfassend einen magnetischen Speicher (MRAM), in welchem Referenzvektoren und Konfigurationsparameter aller Vektoren gespeichert werden können, wenn das System heruntergefahren wird.

18. System gemäss einem der Ansprüche 12 bis 17, umfassend eine Vielzahl von Unterkomponenten, welche als System in Package (SIP) verpackt sind.

EP 3 754 507 B1

**Revendications**

1. Circuit de réseau neuronal (1) comprenant une couche d'entrée (10), une couche cachée (11) et une couche de sortie (12), la couche cachée comportant une pluralité de neurones (110) destinés à traiter un vecteur d'entrée (IN) avec un nombre variable de composantes (C0, C1, ..) et une profondeur de composante variable qui est introduit dans la couche d'entrée (10) pour être comparé à des vecteurs de référence (REF) stockés dans lesdits neurones, le circuit comprenant une pluralité de blocs de mémoire (3) ;

   chaque neurone (110) étant associé à un desdits blocs de mémoire (3), chaque bloc de mémoire stockant au moins un dit vecteur de référence,
   chaque neurone (110) étant associé à un calculateur de distance (5) pour calculer une distance entre le vecteur d'entrée (IN) et ledit vecteur de référence (REF) ;
   **caractérisé en ce que**
   ledit circuit de réseau neuronal (1) est une architecture à énergie coulombienne restreinte (RCE) avec une fonction de base radiale (RBF),
   chaque bloc de mémoire étant associé à un sous-ensemble desdits neurones,
   et **en ce que**
   le nombre de neurones actifs dans ledit sous-ensemble desdits neurones partageant un bloc de mémoire (3) est configurable, les autres neurones dans ledit sous-ensemble desdits neurones étant définis comme inactifs.

2. Circuit selon la revendication 1, dans lequel au moins au moins un calculateur de distance (5) est partagé entre une pluralité de neurones (110), et chaque neurone (110) comprend un registre de distance individuel (50).

3. Circuit selon l'une des revendications 1 ou 2, chaque neurone (110) comprenant en outre un ensemble de registres de configuration locale (4).

4. Circuit selon la revendication 3, ledit ensemble de registres de configuration locale (4) comprenant au moins un registre de mode agencé pour déterminer le nombre de neurones (110) entre lesquels le bloc mémoire associé (3) est partagé.

5. Circuit selon l'une des revendications 3 ou 4, ledit ensemble de registres de configuration locale (4) comprenant au moins un registre de mode agencer pour déterminer le nombre de neurones (110) entre lesquels le bloc mémoire associé (3) et le calculateur de distance sont partagés.

6. Circuit selon l'une des revendications 4 à 5, ledit registre de mode étant agencé pour déterminer un compromis entre ledit nombre de neurones (110) partageant le même bloc mémoire (3) et le nombre de composantes par vecteur d'entrée.

7. Circuit selon l'une des revendications 3 à 6, ledit ensemble de registres de configuration locale (4) comprenant un registre de contexte agencé pour déterminer le nombre de bits des composantes de référence accessibles par le neurone dans le bloc mémoire associé (3).

8. Circuit selon l'une des revendications 1 à 7, chaque bloc mémoire (3) étant agencé pour stocker une pluralité de mots à des adresses mémoire successives, chaque mot stockant un nombre configurable de composantes de référence.

9. Circuit selon la revendication 8, chaque neurone (110) comprenant en outre un multiplexeur (8) agencé pour sélectionner la ou les portions de chaque mot qui doivent être utilisées par le calculateur de distance (5).

10. Circuit selon l'une des revendications 1 à 9, dans lequel le type de distance qui est calculé par le calculateur de distance (5) peut être sélectionné avec un registre.

11. Circuit selon l'une des revendications 1 à 10, dans lequel ledit calculateur de distance (5) calcule de manière itérative la différence entre les composantes correspondantes du vecteur d'entrée (IN) et du vecteur de référence (REF).

12. Un système (29) comprenant:

   au moins un circuit de réseau neuronal (1) selon l'une des revendications précédentes ;
   au moins un capteur (24) ;

une unité de traitement (21 ; 25) agencée pour recevoir des données dudit capteur (24), prétraiter ces données, de manière à générer un vecteur d'entrée (IN) ;

une interface (23; 26, 27) entre ladite unité de traitement (21) et le circuit de réseau neuronal (1) pour transmettre ledit vecteur d'entrée (IN) audit circuit de réseau neuronal (1), et pour transmettre un résultat (RESULT) dudit circuit de réseau neuronal (1) à ladite unité de traitement (21; 25).

13. Système selon la revendication 12, ladite unité de traitement comprenant un FPGA (25) agencé pour extraire des caractéristiques à partir desdites données et/ou pour traiter le résultat.

14. Système selon l'une des revendications 12 ou 13, comprenant une pluralité desdits circuits de réseau neuronal (1) en parallèle.

15. Système selon l'une des revendications 12 à 14, ladite interface comprenant un premier bus mémoire (27) agencé pour transmettre ledit vecteur d'entrée (IN) audit circuit de réseau neuronal (1), et un second bus mémoire (26) agencé pour transmettre ledit résultat (RESULT) depuis ledit circuit de réseau neuronal (1).

16. Système selon l'une des revendications 12 à 14, ladite interface comprenant un premier bus mémoire (27) agencé pour transmettre ledit vecteur d'entrée (IN) audit circuit de réseau neuronal (1), et un deuxième bus mémoire (26) agencé pour transmettre ledit résultat (RESULT) depuis ledit circuit de réseau neuronal (1) ou pour déterminer le neurone ayant la plus petite distance au vecteur d'entrée (IN).

17. Système selon l'une des revendications 12 à 16, comprenant en outre une mémoire magnétique (MRAM) dans laquelle des vecteurs de référence et des paramètres de configuration de tous les vecteurs peuvent être stockés lorsque le système est arrêté.

18. Système selon l'une des revendications 12 à 17, comprenant une pluralité de sous-composantes qui sont conditionnés sous forme de système dans un boîtier (SIP).

DNN

Fig. 1A

CNN

Fig. 1B

RNN

Fig. 1C

10          11          12

110

120

100

1

Fig. 2

Fig. 3

Fig. 4

| N0 | N1 |  | N2 | N3 |
|---|---|---|---|---|

| R1 | R0 |
|---|---|
| R1P | R0P |
| R1' | R0' |
| R1P' | R0P' |

Fig. 5A

| N0 | N1 |
|---|---|

| R1 | R0 |
|---|---|
| R1' | R0' |

Fig. 5B

| N0 | N1 |
|---|---|

| R0 |
|---|
| R0' |

Fig. 5C

| N0 |
|---|

| R1 | R0 |
|---|---|

Fig. 5D

COGITO-1-EP

Fig. 6

Fig. 7

**EP 3 754 507 B1**

**Patent documents cited in the description**

- US 5740326 A
- US 9269041 B2
- US 6523018 B1
- EP 1073013 A1